(19) Europäisches Patentamt
European Patent Office
Office européen des brevets

(11) EP 4 011 976 A1

(12) EUROPEAN PATENT APPLICATION

(43) Date of publication:
**15.06.2022 Bulletin 2022/24**

(21) Application number: **20213872.3**

(22) Date of filing: **14.12.2020**

(51) International Patent Classification (IPC):
***C08L 69/00*** *(2006.01)* ***C08L 67/02*** *(2006.01)*

(52) Cooperative Patent Classification (CPC):
**C08L 67/02; C08L 69/005**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SHPP Global Technologies B.V.**
**4612 PX Bergen op Zoom (NL)**

(72) Inventors:
- **WANG, Jian**
  **Pudong, Shanghai 2550 (CN)**
- **ZHENG, Yun**
  **Pudong, Shanghai 2550 (CN)**
- **SHAN, Wei**
  **Pudong, Shanghai 2550 (CN)**

(74) Representative: **Dehns**
**St. Bride's House**
**10 Salisbury Square**
**London EC4Y 8JD (GB)**

# (54) THERMOPLASTIC COMPOSITIONS WITH LOW DISSIPATION FACTOR FOR NANO MOLDING TECHNOLOGY (NMT) APPLICATIONS

(57) Thermoplastic compositions include: (a) a polyester component; (b) a polycarbonate copolymer component comprising a polyester-polycarbonate copolymer, a polycarbonate-dimethyl bisphenol cyclohexane copolymer (DMBPC), or a combination thereof; (c) an impact modifier component comprising a diblock copolymer; and (d) a glass fiber component.

EP 4 011 976 A1

## Description

### FIELD OF THE DISCLOSURE

The present disclosure relates to polyester-based compositions having good dielectric properties suitable for use in nano molding technology (NMT) applications.

### BACKGROUND OF THE DISCLOSURE

Nano molding technology (NMT) is an innovative technology wherein plastic resins are integrated with metal through convenient injection molding processes. Because of the features like excellent metal bonding reliability, high productivity, good cost efficiency, etc., NMT materials have been widely used in the consumer electronics industry, especially in antenna split solutions in the mobile devices and tablets. These materials offer good waterproof performance and antenna efficiency. Polybutylene terephthalate (PBT), Polyphenylene sulfide (PPS), and Polyamide (PA) are primarily used in the NMT process. However, with the most balanced overall performance, for example high metal bonding strength, good color-ability and color stability (or chemical resistance) etc., PBT has become the most popular base resin in the NMT market.

The 5G telecommunications standard is in effect. The high working frequency of the 5G network imposes new and different requirements on the materials used in 5G devices. In general, materials with low dielectric constant (Dk) and low dissipation factor (Df) are desired due to their low influence on the RF efficiency and high benefit to antenna performance. Some solutions for low Dk NMT compositions have been reported. For example, PCT application WO 2019/130269 (SABIC) describes a technology for PBT-based compositions including a low Dk glass fiber and hollow filler as the filler group. CN107365480A (Jianghe Material Tech) describes high heat resistant low Dk compositions including poly(cyclohexanedimethylene terephthalate) (PCT) as the base resin. Conventional compositions having an ultra-low Df (less than 0.007 at greater than 1 GHz) have not been identified, however. For example, PBT has a Df of around 0.006 at 1.9 GHz, but the Df increases as additives are incorporated into the PBT composition. It is thus very challenging to maintain the Df of polyester-based NMT compositions at an ultra-low level.

These and other shortcomings are addressed by aspects of the present disclosure.

### SUMMARY

Aspects of the disclosure relate to thermoplastic compositions including: (a) a polyester component; (b) a polycarbonate copolymer component comprising a polyester-polycarbonate copolymer, a polycarbonate-dimethyl bisphenol cyclohexane copolymer (DMBPC), or a combination thereof; (c) an impact modifier component comprising a diblock copolymer; and (d) a glass fiber component.

In specific aspects the thermoplastic composition includes: from about 30 wt% to about 80 wt% of the polyester component; from about 3 wt% to about 30 wt% of the polycarbonate copolymer component; from about 5 wt% to about 20 wt% of the impact modifier component; and from about 10 wt% to about 50 wt% of the glass fiber component. The combined weight percent value of all components does not exceed 100 wt%, and all weight percent values are based on the total weight of the composition.

### DETAILED DESCRIPTION

This article discloses a novel solution which offers thermoplastic compositions with ultra-low dielectric dissipation factor (Df) and good mechanical performance used in Nano Molding Technology (NMT) for electronics and/or telecommunication related applications.

The present disclosure can be understood more readily by reference to the following detailed description of the disclosure and the Examples included therein. In various aspects, the present disclosure pertains to thermoplastic compositions including: (a) a polyester component; (b) a polycarbonate copolymer component comprising a polyester-polycarbonate copolymer, a polycarbonate-dimethyl bisphenol cyclohexane copolymer (DMBPC), or a combination thereof; (c) an impact modifier component comprising a diblock copolymer; and (d) a glass fiber component.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method

set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

## Definitions

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polyester component" includes mixtures of two or more polyester components.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated $\pm 10\%$ variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optional impact modifier" means that the impact modifier can or cannot be included and that the description includes compositions that both include and do not include an impact modifier.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that

each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, the terms "number average molecular weight" or "$M_n$" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, e.g., polycarbonate polymers, by methods well known to a person having ordinary skill in the art using molecular weight standards, e.g. polycarbonate standards or polystyrene standards, preferably certified or traceable molecular weight standards.

As used herein, the terms "weight average molecular weight" or "$M_w$" can be used interchangeably, and are defined by the formula:

$$M_w = \frac{\sum N_i M_i^2}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "polydispersity index" or "PDI" can be used interchangeably, and are defined by the formula:

$$PDI = \frac{M_w}{M_n}.$$

The PDI has a value equal to or greater than 1, but as the polymer chains approach uniform chain length, the PDI approaches unity.

The terms "BisA," "BPA," or "bisphenol A," which can be used interchangeably, as used herein refers to a compound having a structure represented by the formula:

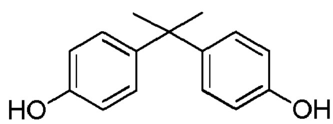

BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

**Thermoplastic Compositions**

Aspects of the disclosure relate to a thermoplastic composition including: (a) a polyester component; (b) a polycarbonate copolymer component including a polyester-polycarbonate copolymer, a polycarbonate-dimethyl bisphenol cyclohexane copolymer (DMBPC), or a combination thereof; (c) an impact modifier component including a diblock copolymer; and (d) a glass fiber component. In particular aspects the thermoplastic composition includes: from about 30 wt% to about 80 wt% of the polyester component; from about 3 wt% to about 30 wt% of the polycarbonate copolymer component; from about 5 wt% to about 20 wt% of the impact modifier component; and from about 10 wt% to about 50 wt% of the glass fiber component. The combined weight percent value of all components does not exceed 100 wt%, and all weight percent values are based on the total weight of the composition.

In some aspects the polyester component includes polybutylene terephthalate (PBT), polyethylene terephthalate (PET), poly(cyclohexylenedimethylene terephthalate) (PCT), polyethylene terephthalate glycol (PETG), polycyclohexylene dimethylene terephthalate glycol (PCTG), polycyclohexylene dimethylene terephthalate acid (PCTA), copolymers thereof, or a combination thereof. PCT is a crystalline polyester formed from cyclohexanedimethanol (CHDM) and either dimethyl terephthalate (DMT) or terephthalic acid (TPA). PETG and PCTG are copolyesters formed by including ethylene glycol (EG) in the polymerization reaction. PETG is formed if less than 50% of the diol content in the copolyester is CHDM; PCTG is formed if greater than 50% of the diol content in the copolyester is CHDM. PCTA is formed by including additional diacids such as isophthalic acid (IPA). In a particular aspect the polyester component includes PBT.

The thermoplastic composition includes in some aspects a polycarbonate copolymer component including a polyester-polycarbonate copolymer. In a specific aspect, the polyester unit is derived from the reaction of isophthalic acid, terephthalic acid, and resorcinol (also known as an ITR resin). The polyester unit has the following structure:

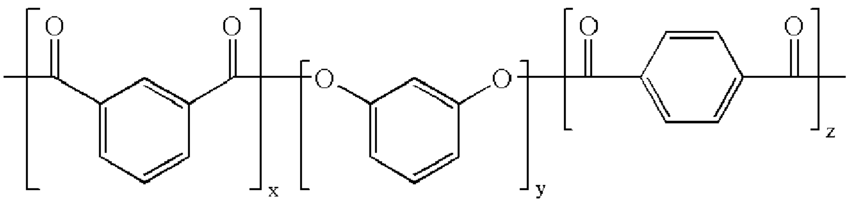

where x corresponds to the molar ratio of the isophthalate, y corresponds to the molar ratio of the resorcinol, and z corresponds to the molar ratio of the terephthalate; x, y, and z adding to 100 percent of the polyester unit. Such polyester-polycarbonates are available as LEXAN® SLX resin from SABIC. The concentration of polyester (ITR) resin may be least 5%, based on the number of moles in the polymer. In further aspects, the polyester and polycarbonate are used in a molar ratio of from about 5:95 to about 40:60 or more particularly from about 5:95 to about 35:65, depending on the properties desired. The polyester-polycarbonates may have a weight average molecular weight of from about 1,500 to about 100,000 or more particularly from about 2,000 to about 40,000. The polyester-polycarbonate polymer can be a copolymer, especially a block copolymer.

In other aspects the polycarbonate copolymer component includes a polycarbonate-dimethyl bisphenol cyclohexane copolymer (DMBPC) including at least 50 mol% dimethyl bisphenol cyclohexane monomer. DMBPC has the formula:

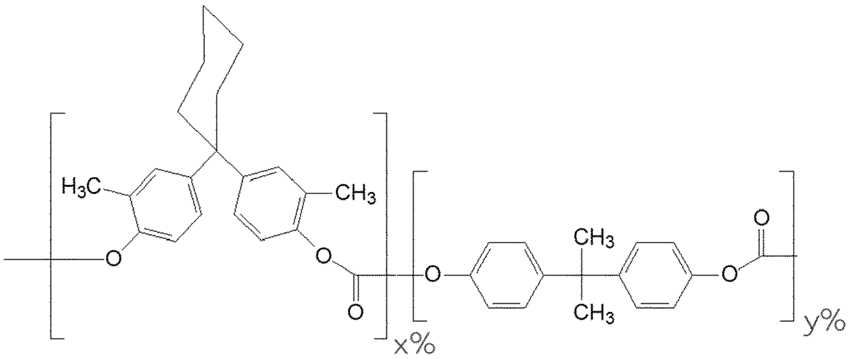

wherein x and y represent the molar ratio of dimethyl bisphenol cyclohexane monomer and polycarbonate monomer, respectively. Thus when x is 50 y is also 50 and the copolymer includes 50 mol% dimethyl bisphenol cyclohexane monomer and 50 mol% polycarbonate monomer. In some aspects x is from 20 to 100.

The thermoplastic composition includes a diblock copolymer. In a particular aspect the diblock copolymer includes an ethylene-glycidyl methacrylate copolymer. In specific aspects the impact modifier component does not include a terpolymer (such as but not limited to ethylene-methyl acrylate-glycidyl methacrylate (E-MA-GMA)).

In certain aspects the composition includes from about 1 wt% to about 5 wt% of the ethylene-glycidyl methacrylate copolymer.

The glass fiber component may include in some aspects a low Dk/Df glass fiber, such as but not limited to glass fiber having a Dk of less than 5.0 at 1 gigahertz (GHz) and a Df of less than 0.002 at 1 GHz, wherein Dk and Df are tested in accordance with ASTM D150.

In some aspects the composition further includes an additional impact modifier including an ionomer, styrene-ethylene/1-butene-styrene (SEBS), or a combination thereof. The ionomer in some aspects includes but is not limited to zinc, sodium, magnesium, or calcium. In a particular aspect the ionomer includes ethylene-acrylic acid zinc.

In further aspects the composition further includes up to 10 wt% of a polyolefin additive. The polyolefin additive may include, but is not limited to, polypropylene (PP), polystyrene (PS), cyclic olefin copolymer (COC), or a combination thereof.

The thermoplastic composition has improved properties as compared to conventional NMT compositions. In specific aspects the composition has a Df of less than 0.007 at a frequency of from 1 to 5 GHz when tested according to the SABIC Method. The "SABIC Method" for determining Dk and Df includes measuring these values using a QWED split post dielectric resonator and an Agilent network analyzer. For the 1.1 Gigahertz (GHz) measurement, the minimum sample size is 120 millimeter (mm) x 120 mm; the maximum sample thickness is 6 mm. For the 1.9 GHz measurement, the minimum sample size is 70 mm x 70mm; the maximum sample thickness is 4 mm. For the 5.0 GHz measurement, the minimum sample size is 30 mm x 30mm; the maximum sample thickness is 2 mm.

**Methods of Manufacture**

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets

may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

**Articles of Manufacture**

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form the articles. In a particular aspect the article may be incorporated into an electronic or telecommunications device.

Various combinations of elements of this disclosure are encompassed by this disclosure, e.g., combinations of elements from dependent claims that depend upon the same independent claim.

Aspects **of the Disclosure**

In various aspects, the present disclosure pertains to and includes at least the following aspects.

Aspect 1. A thermoplastic composition comprising:

(a) a polyester component;
(b) a polycarbonate copolymer component comprising a polyester-polycarbonate copolymer, a polycarbonate-dimethyl bisphenol cyclohexane copolymer (DMBPC), or a combination thereof;
(c) an impact modifier component comprising a diblock copolymer; and
(d) a glass fiber component.

Aspect 2. The thermoplastic composition according to Aspect 1, wherein the composition comprises:

from about 30 wt% to about 80 wt% of the polyester component;
from about 3 wt% to about 30 wt% of the polycarbonate copolymer component;
from about 5 wt% to about 20 wt% of the impact modifier component; and
from about 10 wt% to about 50 wt% of the glass fiber component,

wherein the combined weight percent value of all components does not exceed 100 wt%, and all weight percent values are based on the total weight of the composition.

Aspect 3. The thermoplastic composition according to Aspect 1 or 2, wherein the polyester component comprises polybutylene terephthalate (PBT), polyethylene terephthalate (PET), poly(cyclohexylenedimethylene terephthalate) (PCT), polyethylene terephthalate glycol (PETG), polycyclohexylene dimethylene terephthalate glycol (PCTG), polycyclohexylene dimethylene terephthalate acid (PCTA), copolymers thereof, or a combination thereof.

Aspect 4. The thermoplastic composition according to any of Aspects 1 to 3, wherein the polyester component comprises PBT.

Aspect 5. The thermoplastic composition according to any of Aspects 1 to 4, wherein the polycarbonate copolymer component comprises a polyester-polycarbonate copolymer comprising polycarbonate and a polyester unit derived from the reaction of isophthalic acid, terephthalic acid, and resorcinol (ITR).

Aspect 6. The thermoplastic composition according to any of Aspects 1 to 5, wherein the polycarbonate copolymer component comprises a polycarbonate-dimethyl bisphenol cyclohexane copolymer (DMBPC) comprising at least 50 mol% dimethyl bisphenol cyclohexane monomer.

Aspect 7. The thermoplastic composition according to any of Aspects 1 to 6, wherein the impact modifier component comprising the diblock copolymer comprises an ethylene-glycidyl methacrylate copolymer.

Aspect 8. The thermoplastic composition according to Aspect 7, wherein the impact modifier component does not include a terpolymer.

Aspect 9. The thermoplastic composition according to Aspect 7 or 8, wherein the composition comprises from about

1 wt% to about 5 wt% of the ethylene-glycidyl methacrylate copolymer.

Aspect 10. The thermoplastic composition according to any of Aspects 1 to 9, wherein the glass fiber component comprises glass fiber having a dielectric constant (Dk) of less than 5.0 at 1 gigahertz (GHz) and a dissipation factor (Df) of less than 0.002 at 1 GHz, wherein Dk and Df are tested in accordance with ASTM D150.

Aspect 11. The thermoplastic composition according to any of Aspects 1 to 10, wherein the composition further comprises an additional impact modifier comprising an ionomer, styrene-ethylene/1-butene-styrene (SEBS), or a combination thereof.

Aspect 12. The thermoplastic composition according to Aspect 11, wherein the composition comprises the ionomer, and the ionomer comprises ethylene-acrylic acid zinc.

Aspect 13. The thermoplastic composition according to any of Aspects 1 to 12, wherein the composition further comprises up to 10 wt% of a polyolefin additive.

Aspect 14. The thermoplastic composition according to Aspect 13, wherein the polyolefin additive comprises polypropylene (PP), polystyrene (PS), cyclic olefin copolymer (COC), or a combination thereof.

Aspect 15. The thermoplastic composition according to any of Aspects 1 to 14, wherein the composition has a dissipation factor of less than 0.007 at a frequency of from 1 to 5 GHz when tested according to the SABIC Method.

## EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Compositions described herein were extruded and injection molded. A typical extrusion profile for the compositions is provided in Table 1:

**Table 1 - Extrusion Profile**

| Parameters | Unit | Condition |
|---|---|---|
| Compounder Type | NONE | TEM-37BS |
| Barrel Size | Mm | 1500 |
| Die | Mm | 4 |
| Zone 1 Temp | °C | 100 |
| Zone 2 Temp | °C | 200 |
| Zone 3 Temp | °C | 250 |
| Zone 4 Temp | °C | 250 |
| Zone 5 Temp | °C | 250 |
| Zone 6 Temp | °C | 260 |
| Zone 7 Temp | °C | 260 |
| Zone 8 Temp | °C | 260 |
| Zone 9 Temp | °C | 260 |
| Zone 10 Temp | °C | 260 |
| Zone 11 Temp | °C | 260 |
| Die Temp | °C | 260 |
| Screw speed | Rpm | 200 |

(continued)

| Parameters | Unit | Condition |
|---|---|---|
| Throughput | kg/hr | 50 |
| Torque | % | 80-90 |
| Vacuum 1 | Bar | -0.08 |
| Side Feeder 1 speed | Rpm | 250 |
| Melt temperature | °C | 265-275 |

The typical injection molding profile for the compositions is shown in Table 2:

**Table 2 -Molding Profile**

| Parameters | Unit | Condition |
|---|---|---|
| Pre-drying time | Hour | 4 |
| Pre-drying temp | °C | 120 |
| Molding Machine | NONE | FANUC, SE180 |
| Mold Type (insert) | NONE | ASTM Tensile, Flexural, & Izod bars 100×70× 1.6mm plaques |
| Hopper temp | °C | 50 |
| Zone 1 temp | °C | 240 |
| Zone 2 temp | °C | 250 |
| Zone 3 temp | °C | 260 |
| Nozzle temp | °C | 250 |
| Mold temp | °C | 120 |
| Screw speed | rpm | 100 |
| Back pressure | $kgf/cm^2$ | 30 |
| Cooling time | s | 20-30 |
| Injection speed | mm/s | 50-100 |
| Holding pressure | $kgf/cm^2$ | 800-1000 |
| Max. Injection pressure | $kgf/cm^2$ | 1000-1500 |

Compositions were formed as shown in Table 3; the properties of these compositions are shown in Table 4:

**Table 3 - Comparative and Example Compositions**

| Item Description | Unit | C1.1 | E1.1 | E1.2 | E1.3 |
|---|---|---|---|---|---|
| PBT, low viscosity | % | 33.2 | 33.2 | 33.2 | 33.2 |
| PBT, high viscosity | % | 30 | 30 | 30 | 30 |
| SLX 90/10 PCP capped, copolymer | % | 6 | 6 | 6 | 6 |
| Kraton SEBS, G1651 | % | 12 | 9 | 10 | 8 |
| Ethylene-Acrylic Acid Zinc Ionomer | % | | | | 2 |
| AX8840, Ethylene-glycidyl methacrylate copolymer | % | | 3 | 2 | 2 |
| CPIC low Dk glass fiber, ECS303N-3-K/HL | % | 18 | 18 | 18 | 18 |
| Mono zinc phosphate | % | 0.05 | 0.05 | 0.05 | 0.05 |
| Pentaerythritol tetrastearate | % | 0.3 | 0.3 | 0.3 | 0.3 |

(continued)

| Item Description | Unit | C1.1 | E1.1 | E1.2 | E1.3 |
|---|---|---|---|---|---|
| 2-(2'hydroxy-5-t-octylphenyl)-benzotriazole | % | 0.25 | 0.25 | 0.25 | 0.25 |
| Irganox 1010 | % | 0.1 | 0.1 | 0.1 | 0.1 |
| Hostanox P-EPQ P | % | 0.1 | 0.1 | 0.1 | 0.1 |

**Table 4 - Properties of the Compositions of Table 3**

| Typical Property | Test Method | Test Description | Unit | C1.1 | E1.1 | E1.2 | E1.3 |
|---|---|---|---|---|---|---|---|
| MVR | 275°C/5kg | ASTM D1238 | $cm^3/10$ | 37.7 | 17.8 | 23.6 | 18.2 |
| Bonding strength | T-treatment | ISO 19095 | MPa | 26.4 | 29.0 | 28.7 | 29.9 |
| | TRI-treatment | ISO 19095 | MPa | 27.8 | 30.8 | 30.1 | 32.8 |
| Notched Izod | 23°C, 5 lbf/ft | ASTM D256 | J/m | 106 | 142 | 132 | 152 |
| | -20°C, 5 lbf/ft | ASTM D256 | J/m | 81 | 106 | 97 | 114 |
| Un-notched Izod | 23°C, 5 lbf/ft | ASTM D256 | J/m | 754 | 837 | 797 | 1030 |
| HDT | 1.82MPa/3.2 mm | ASTM D648 | °C | 174 | 185 | 183 | 179 |
| | 0.45MPa/3.2 mm | ASTM D648 | °C | 213 | 214 | 214 | 215 |
| Flexural Modulus | 3.2mm, 1.27mm/min | ASTM D790 | MPa | 4680 | 4640 | 4640 | 4610 |
| Flexural Strength | @break, 3.2mm | ASTM D790 | MPa | 129 | 135 | 134 | 140 |
| Tensile Modulus | 5mm/min | ASTM D638 | MPa | 4989 | 5042 | 5001 | 4978 |
| Tensile Strength | @break | ASTM D638 | MPa | 76 | 80 | 79 | 81 |
| Tensile Elongation | @break | ASTM D638 | % | 3.39 | 3.73 | 3.73 | 4.54 |
| Dk | 1.9 GHz | SABIC Method | / | 2.950 | 2.947 | 2.940 | 2.957 |
| Df | 1.9 GHz | SABIC Method | / | 0.0058 | 0.0061 | 0.0060 | 0.0059 |
| Dk | 5.0 GHz | SABIC Method | / | 2.997 | 2.993 | 2.987 | 2.993 |
| Df | 5.0 GHz | SABIC Method | / | 0.0052 | 0.0055 | 0.0054 | 0.0053 |

For all compositions tested the "SABIC Method" for determining Dk and Df includes measuring these values using a QWED split post dielectric resonator and an Agilent network analyzer. For the 1.1 Gigahertz (GHz) measurement, the minimum sample size is 120 millimeter (mm) x 120 mm; the maximum sample thickness is 6 mm. For the 1.9 GHz measurement, the minimum sample size is 70 mm x 70mm; the maximum sample thickness is 4 mm. For the 5.0 GHz measurement, the minimum sample size is 30 mm x 30mm; the maximum sample thickness is 2 mm.

As shown in Table 3; composition C1.1 was a control composition using PBT as the base resin. SLX90/10 is a bonding force promoter, SEBS is an impact modifier, and the filler is a low Dk glass fiber. Compositions E1.1-E1.3 were compositions according to the present disclosure. Example composition E1.1, with a total impact modifier loading at the same level as that in C1.1 (i.e. 12%) further included 3% ethylene-glycidyl methacrylate copolymer (AX8840). Example composition E1.2 added 2% AX8840. Example composition E1.3 added 2% AX8840 and 2% Ethylene-acrylic acid zinc ionomer to replace some of the SEBS.

As shown in Table 4, when only SEBS was used as the impact modifier (C1.1) notched Izod impact (NII) performance was low. Addition of AX8840 can result in greatly improved impact strength and tensile elongation (see E1.1 and E1.2). Further, the bonding strength can also be improved. Although the dissipation factor (Df) of the compositions was slightly higher when AX8840 was included, it was still at a very low level (< 0.007 at 1-5 GHz) when the loading of AX8840 was not high. Addition of ionomer further improved the ductility of the composition with little influence to the other properties like bonding strength and Dk/Df. Compare E1.3 to E1.2.

In sum, using the building blocks of a polyester (e.g., PBT base resin), a bonding force promoter (e.g., SLX90/10),

a low Dk glass fiber (filler), and impact modifiers of AX8840 plus SEBS and/or ionomer, the example compositions showed high metal bonding strength (>28 MPa under both 'T' and 'TRI' treatment methods), good impact, and ultra-low Df (< 0.007 at 1-5 GHz) performance.

Additional compositions were formed as shown in Table 5; the properties of these compositions are shown in Table 6:

**Table 5 - Comparative and Example Compositions**

| Item Description | Unit | C2.1 | E2.1 | E2.2 | E2.3 | E2.4 |
|---|---|---|---|---|---|---|
| PBT, low viscosity | % | 31.2 | 30.2 | 30.2 | 30.2 | 30.2 |
| PBT, high viscosity | % | 30 | 28 | 28 | 21 | 11 |
| SLX 90/10 PCP capped, copolymer | % | 8 | 8 | 8 | 8 | 8 |
| Kraton SEBS, G1651 | % | 7 | 7 | 7 | 7 | 7 |
| Topas COC 6017S-04 | % | | 3 | | | |
| General purpose Polystyrene | % | | | 3 | | |
| AX8840 | % | 3 | 3 | 3 | 3 | 3 |
| CPIC low Dk glass fiber, ECS303N-3-K/HL | % | 20 | 20 | 20 | 30 | 40 |
| Mono zinc phosphate | % | 0.05 | 0.05 | 0.05 | 0.05 | 0.05 |
| Pentaerythritol tetrastearate | % | 0.3 | 0.3 | 0.3 | 0.3 | 0.3 |
| 2-(2'hydroxy-5-t-octylphenyl)-benzotriazole | % | 0.25 | 0.25 | 0.25 | 0.25 | 0.25 |
| Irganox 1010 | % | 0.1 | 0.1 | 0.1 | 0.1 | 0.1 |
| Hostanox P-EPQ P | % | 0.1 | 0.1 | 0.1 | 0.1 | 0.1 |

**Table 6 - Properties of the Compositions of Table 5**

| Typical Property | Test Method | Test Description | Unit | C2.1 | E2.1 | E2.2 | E2.3 | E2.4 |
|---|---|---|---|---|---|---|---|---|
| MVR | 275°C/5kg | ASTM D1238 | $cm^3$/10 min | 20.6 | 17.0 | 22.7 | 13.1 | 6.5 |
| Bonding strength | T-treatment | ISO 19095 | MPa | 31.3 | 30.2 | 31.2 | 28.3 | 29.2 |
| Notched Izod | 23°C, 5 lbf/ft | ASTM D256 | J/m | 135 | 127 | 125 | 161 | 165 |
| | -20°C, 5 lbf/ft | ASTM D256 | J/m | 98 | 96 | 95 | 120 | 129 |
| Un-notched Izod | 23°C, 5 lbf/ft | ASTM D256 | J/m | 807 | 885 | 881 | 928 | 917 |
| HDT | 1.82MPa/3.2 mm | ASTM D648 | °C | 184 | 187 | 183 | 196 | 199 |
| | 0.45MPa/3.2 mm | ASTM D648 | °C | 216 | 216 | 215 | 219 | 220 |
| Flexural Modulus | 3.2mm, 1.27mm/min | ASTM D790 | MPa | 5110 | 5200 | 5250 | 7070 | 9040 |
| Flexural Strength | @break, 3.2mm | ASTM D790 | MPa | 136 | 139 | 139 | 161 | 178 |
| Tensile Modulus | 5mm/min | ASTM D638 | MPa | 5658 | 5699 | 5729 | 7784 | 10021 |
| Tensile Strength | @break | ASTM D638 | MPa | 85 | 88 | 88 | 102 | 110 |

(continued)

| Typical Property | Test Method | Test Description | Unit | C2.1 | E2.1 | E2.2 | E2.3 | E2.4 |
|---|---|---|---|---|---|---|---|---|
| Tensile Elongation | @break | ASTM D638 | % | 2.92 | 3.15 | 3.07 | 2.92 | 2.46 |
| Dk | 1.9 GHz | SABIC Method | / | 3.013 | 2.977 | 2.980 | 3.137 | 3.243 |
| Df | 1.9 GHz | SABIC Method | / | 0.0062 | 0.0059 | 0.0060 | 0.0062 | 0.0063 |
| Dk | 5.0 GHz | SABIC Method | / | 3.050 | 3.020 | 3.023 | 3.153 | 3.257 |
| Df | 5.0 GHz | SABIC Method | / | 0.0052 | 0.0050 | 0.0050 | 0.0054 | 0.0056 |

The results in Tables 5 and 6 demonstrate that the dielectric constant (Dk) and dissipation factor (Df) of compositions according to the disclosure can be further improved. Composition C2.1 was a control example. In example compositions E2.1 and E2.2, cyclic olefin copolymer (COC) and polystyrene (PS), respectively, were added. In example compositions E2.3 and E2.4 the glass fiber content was increased to 30% and 40%, respectively.

As shown in Table 6, COC and PS can help to decrease the Dk and Df of the compositions. See example compositions E2.1 and E2.2, with 3% COC and PS respectively. The Dk and Df of the compositions decreased from 3.013/0.0062 to 2.977/0.0059 (E2.1) and 2.98/0.0060 (E2.2) at 1.9GHz. Further, bonding strength and mechanical performance of the compositions was similar to C2.1

When the glass fiber content was increased to 30% and 40% (E2.3 and E2.4), mechanical performance of the compositions, including the impact strength, modulus, stiffness, and thermal stability was greatly improved, and the Df of the compositions was maintained at a very low level (< 0.007 at 1-5GHz).

From these examples it was observed that, polyolefins such as COC and PS can help to decrease the Dk and Df of the compositions while maintaining the metal bonding and mechanical performance.

Compositions were formed as shown in Table 7; the properties of these compositions are shown in Table 8:

**Table 7 - Comparative and Example Compositions**

| Item Description | Unit | C3.1 | E3.1 | E3.2 | E3.3 | E3.4 |
|---|---|---|---|---|---|---|
| PBT, low viscosity | % | 32.2 | 32.2 | 32.2 | 28.2 | 28.2 |
| PBT, high viscosity | % | 31 | 31 | 31 | 26 | 26 |
| SLX 90/10 PCP capped, copolymer | % | 10 | | | | |
| DMX100 | % | | 10 | | 15 | |
| DMX50 | % | | | 10 | | 15 |
| Kraton SEBS, G1651 | % | 5 | 5 | 5 | 10 | 10 |
| AX8840 | % | 3 | 3 | 3 | 2 | 2 |
| CPIC low Dk glass fiber, ECS303N-3-K/HL | % | 18 | 18 | 18 | 18 | 18 |
| Mono zinc phosphate | % | 0.05 | 0.05 | 0.05 | 0.05 | 0.05 |
| Pentaerythritol tetrastearate | % | 0.3 | 0.3 | 0.3 | 0.3 | 0.3 |
| 2-(2'hydroxy-5-t-octylphenyl)-benzotriazole | % | 0.25 | 0.25 | 0.25 | 0.25 | 0.25 |
| Irganox 1010 | % | 0.1 | 0.1 | 0.1 | 0.1 | 0.1 |
| Hostanox P-EPQ P | % | 0.1 | 0.1 | 0.1 | 0.1 | 0.1 |

**Table 8 - Properties of the Compositions of Table 7**

| Typical Property | Test Method | Test Description | Unit | C3.1 | E3.1 | E3.2 | E3.3 | E3.4 |
|---|---|---|---|---|---|---|---|---|
| MVR | 275°C/5kg | ASTM D1238 | $cm^3$/10 min | 25.9 | 23.5 | 29.3 | 17.8 | 22.9 |
| Bonding strength | T-treatment | ISO 19095 | MPa | 30.3 | 32.1 | 28.8 | 25.8 | 25.6 |
| Notched Izod | 23°C, 5 lbf/ft | ASTM D256 | J/m | 141 | 115 | 113 | 116 | 115 |
| | -20°C, 5 lbf/ft | ASTM D256 | J/m | 104 | 93 | 90 | 89 | 83 |
| Un-notched Izod | 23°C, 5 lbf/ft | ASTM D256 | J/m | 929 | 929 | 908 | 1080 | 995 |
| HDT | 1.82MPa/3.2 mm | ASTM D648 | °C | 181 | 183 | 183 | 168 | 162 |
| | 0.45MPa/3.2 mm | ASTM D648 | °C | 214 | 213 | 214 | 210 | 207 |
| Flexural Modulus | 3.2mm, 1.27mm/min | ASTM D790 | MPa | 4880 | 4670 | 4740 | 4480 | 4490 |
| Flexural Strength | @break, 3.2mm | ASTM D790 | MPa | 147 | 144 | 147 | 136 | 132 |
| Tensile Modulus | 5mm/min | ASTM D638 | MPa | 5455 | 5374 | 5366 | 4819 | 4849 |
| Tensile Strength | @break | ASTM D638 | MPa | 91 | 92 | 91 | 80 | 80 |
| Tensile Elongation | @break | ASTM D638 | % | 3.69 | 3.73 | 3.71 | 4.17 | 3.99 |
| Dk | 1.9 GHz | SABIC Method | / | 3.010 | 2.943 | 2.953 | 2.887 | 2.907 |
| Df | 1.9 GHz | SABIC Method | / | 0.0065 | 0.0060 | 0.0062 | 0.0053 | 0.0055 |
| Dk | 5.0 GHz | SABIC Method | / | 3.067 | 2.997 | 3.013 | 2.947 | 2.953 |
| Df | 5.0 GHz | SABIC Method | / | 0.0058 | 0.0054 | 0.0055 | 0.0048 | 0.0049 |

With reference to Tables 7 and 8, the effect of inclusion of a PC copolymer (SABIC LEXAN® DMX resin) was evaluated. As shown in Table 7, C3.1 included an ITR copolymer (SLX90/10) as a bonding promoter. Example compositions E3.1 and E3.2 included DMX100 and DMX50 in place of the SLX90/10. In example compositions E3.3 and E3.4, the loading of DMX100 and DMX50 was increased to 15% with higher content of impact modifiers.

As shown in Table 8, when DMX100 and DMX50 was used, Dk and Df of the compositions was substantially lowered, from 3.01/0.0065 to 2.943/0.0060 (E3.1) and 2.953/0.0062 (E3.2) at 1.9GHz. Metal bonding strength of the DMX based compositions was still high, >28 megapascals (MPa) under T-treatment. Thermal and mechanical performance was maintained at a similar level or only slightly lower (i.e. notched Izod) than the SLX-based composition (compare E3.1 and E3.2 to C3.1).

Further, by increasing the loading of DMX resins and impact modifiers, the Dk and Df of the compositions could be further decreased. As shown in example compositions E3.3 and E3.4, when the loading of the DMX resins was increased to 15% and the total impact modifiers to 12% the Dk and Df of the compositions were decreased to 2.887/0.0053 (for DMX100, E3.3) and 2.907/0.0055 (for DMX50, E3.4). Moreover, good mechanical performance and good bonding strength (>25 MPa) was also achieved.

From these examples it is observed that DMX is a good candidate to decrease the Dk and Df of NMT compositions.

Compositions were formed as shown in Table 9; the properties of these compositions are shown in Table 10:

**Table 9 - Comparative and Example Compositions**

| Item Description | Unit | C4.1 | E4.1 | E4.2 | E4.3 | E4.4 |
|---|---|---|---|---|---|---|
| PBT, low viscosity | % | 30.2 | 23.2 | 23.2 | 23.2 | 18.2 |
| PBT, high viscosity | % | 20 | 17 | 16 | 16 | 10 |
| DMX50 | % | 15 | 25 | 25 | 25 | 20 |
| Kraton SEBS, G1651 | % | 9 | 9 | 9 | 10 | 8 |
| Ethylene-Acrylic Acid Zinc Ionomer | % | | | 1 | 1 | 1 |
| AX8840 | % | 3 | 3 | 3 | 2 | 2 |
| CPIC low Dk glass fiber, ECS303N-3-K/HL | % | 22 | 22 | 22 | 22 | 40 |
| Mono zinc phosphate | % | 0.05 | 0.05 | 0.05 | 0.05 | 0.05 |
| Pentaerythritol tetrastearate | % | 0.3 | 0.3 | 0.3 | 0.3 | 0.3 |
| 2-(2'hydroxy-5-t-octylphenyl)-benzotriazole | % | 0.25 | 0.25 | 0.25 | 0.25 | 0.25 |
| Irganox 1010 | % | 0.1 | 0.1 | 0.1 | 0.1 | 0.1 |
| Hostanox P-EPQ P | % | 0.1 | 0.1 | 0.1 | 0.1 | 0.1 |

**Table 10 - Properties of the Compositions of Table 9**

| Typical Property | Test Method | Test Description | Unit | C4.1 | E4.1 | E4.2 | E4.3 | E4.4 |
|---|---|---|---|---|---|---|---|---|
| MVR | 275°C/5kg | ASTM D1238 | $cm^3$/10 min | 16.9 | 13.7 | 10.1 | 13.4 | 5.7 |
| Bonding strength | T-treatment | ISO 19095 | MPa | 29.1 | 24.1 | 25.7 | 25.4 | 23.3 |
| | TRI-treatment | ISO 19095 | MPa | 31.1 | 25.0 | 26.3 | 25.7 | 25.5 |
| Notched Izod | 23°C, 5 lbf/ft | ASTM D256 | J/m | 116 | 105 | 119 | 110 | 149 |
| | -20°C, 5 lbf/ft | ASTM D256 | J/m | 87 | 78 | 84 | 78 | 129 |
| Un-notched Izod | 23°C, 5 lbf/ft | ASTM D256 | J/m | 848 | 893 | 905 | 855 | 1080 |
| HDT | 1.82MPa/3.2 mm | ASTM D648 | °C | 172 | 132 | 130 | 130 | 154 |
| | 0.45MPa/3.2 mm | ASTM D648 | °C | 211 | 198 | 196 | 193 | 206 |
| Flexural Modulus | 3.2mm, 1.27mm/min | ASTM D790 | MPa | 5190 | 5030 | 4940 | 4920 | 8740 |
| Flexural Strength | @break, 3.2mm | ASTM D790 | MPa | 143 | 136 | 134 | 133 | 186 |
| Tensile Modulus | 5mm/min | ASTM D638 | MPa | 5707 | 5615 | 5316 | 5442 | 9352 |
| Tensile Strength | @break | ASTM D638 | MPa | 87 | 83 | 75 | 80 | 113 |
| Tensile Elongation | @break | ASTM D638 | % | 3.19 | 2.73 | 2.80 | 2.80 | 2.94 |

(continued)

| Typical Property | Test Method | Test Description | Unit | C4.1 | E4.1 | E4.2 | E4.3 | E4.4 |
|---|---|---|---|---|---|---|---|---|
| Dk | 1.9 GHz | SABIC Method | / | 2.997 | 2.977 | 2.970 | 2.957 | 3.173 |
| Df | 1.9 GHz | SABIC Method | / | 0.0056 | 0.0052 | 0.0051 | 0.0049 | 0.0054 |

Tables 9 and 10 demonstrate compositions with higher DMX resin content resulting in much lower dielectric performance. Composition C4.1 included 15% DMX50 in the formulation. Example composition E4.1 increased the DMX50 content to 25%. Ionomer was added in example composition E4.2 to improve the impact performance of the composition. Example composition E4.3 included a different ratio of impact modifiers. The glass fiber content was increased to 40% in example composition E4.4.

As shown in Table 10, when the DMX50 loading was increased to 25%, Df of the composition was greatly decreased to 0.0052 at 1.9GHz (compare E4.1 to C4.1). Although bonding strength of the composition decreased slightly, it was still at a satisfactory level (>24 MPa at 'T' and 'TRI' treatment). Impact strength of the composition can be decreased with the increasing of DMX50 in the formulation (105 J/m in E4.1). However, by adding an ionomer impact strength can be greatly improved with all the other performance including bonding strength, dielectric properties, and mechanical performance kept at similar level (see E4.2). By slightly modifying the ratio of the impact modifiers, i.e., decreasing AX8840 to 2% and increasing SEBS to 10%, the Df of the composition can be even lower, becoming < 0.005 at 1.9GHz (see E4.3). And with glass fiber content increased to 40% the composition still showed very good Df performance with much higher modulus and stiffness and good bonding performance (see E4.4). In sum, by including a high loading of DMX resin together with an ionomer, NMT compositions with very low Df properties (< 0.0055 at 1.9GHz) and good bonding and mechanical performance can be achieved.

From these examples it is concluded that NMT compositions with ultra-low Df property, good metal bonding force and good mechanical performance can be achieved. The developed basic building blocks included a polyester (e.g., PBT) as the base resin, a polycarbonate copolymer such as an ITR (e.g., SLX) or DMX as a bonding force promoter, an impact modifier including a di-block copolymer (e.g., ethylene-glycidyl methacrylate copolymer (AX8840)), optionally an impact modifier such as SEBS or an ionomer as an impact modifier, a low Dk glass fiber as the filler, and optionally a polyolefin such as PS or COC as a dielectric additive. Using the developed building blocks, compositions according to aspects of the disclosure demonstrated ultra-low Df property (< 0.007 at 1.9GHz), good metal bonding strength (>23 MPa), and good mechanical and processing performance. The very low Df property allows the compositions to be good candidates for 5G applications.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or non-volatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

1. A thermoplastic composition comprising:

   (a) a polyester component;
   (b) a polycarbonate copolymer component comprising a polyester-polycarbonate copolymer, a polycarbonate-dimethyl bisphenol cyclohexane copolymer (DMBPC), or a combination thereof;
   (c) an impact modifier component comprising a diblock copolymer; and
   (d) a glass fiber component.

2. The thermoplastic composition according to claim 1, wherein the composition comprises:

   from about 30 wt% to about 80 wt% of the polyester component;
   from about 3 wt% to about 30 wt% of the polycarbonate copolymer component;
   from about 5 wt% to about 20 wt% of the impact modifier component; and
   from about 10 wt% to about 50 wt% of the glass fiber component,

   wherein the combined weight percent value of all components does not exceed 100 wt%, and all weight percent values are based on the total weight of the composition.

3. The thermoplastic composition according to claim 1 or 2, wherein the polyester component comprises polybutylene terephthalate (PBT), polyethylene terephthalate (PET), poly(cyclohexylenedimethylene terephthalate) (PCT), polyethylene terephthalate glycol (PETG), polycyclohexylene dimethylene terephthalate glycol (PCTG), polycyclohexylene dimethylene terephthalate acid (PCTA), copolymers thereof, or a combination thereof.

4. The thermoplastic composition according to any of claims 1 to 3, wherein the polyester component comprises PBT.

5. The thermoplastic composition according to any of claims 1 to 4, wherein the polycarbonate copolymer component comprises a polyester-polycarbonate copolymer comprising polycarbonate and a polyester unit derived from the reaction of isophthalic acid, terephthalic acid, and resorcinol (ITR).

6. The thermoplastic composition according to any of claims 1 to 5, wherein the polycarbonate copolymer component comprises a polycarbonate-dimethyl bisphenol cyclohexane copolymer (DMBPC) comprising at least 50 mol% dimethyl bisphenol cyclohexane monomer.

7. The thermoplastic composition according to any of claims 1 to 6, wherein the impact modifier component comprising the diblock copolymer comprises an ethylene-glycidyl methacrylate copolymer.

8. The thermoplastic composition according to claim 7, wherein the impact modifier component does not include a terpolymer.

9. The thermoplastic composition according to claim 7 or 8, wherein the composition comprises from about 1 wt% to about 5 wt% of the ethylene-glycidyl methacrylate copolymer.

10. The thermoplastic composition according to any of claims 1 to 9, wherein the glass fiber component comprises glass fiber having a dielectric constant (Dk) of less than 5.0 at 1 gigahertz (GHz) and a dissipation factor (Df) of less than 0.002 at 1 GHz, wherein Dk and Df are tested in accordance with ASTM D150.

11. The thermoplastic composition according to any of claims 1 to 10, wherein the composition further comprises an additional impact modifier comprising an ionomer, styrene-ethylene/1-butene-styrene (SEBS), or a combination thereof.

12. The thermoplastic composition according to claim 11, wherein the composition comprises the ionomer, and the ionomer comprises ethylene-acrylic acid zinc.

13. The thermoplastic composition according to any of claims 1 to 12, wherein the composition further comprises up to 10 wt% of a polyolefin additive.

**14.** The thermoplastic composition according to claim 13, wherein the polyolefin additive comprises polypropylene (PP), polystyrene (PS), cyclic olefin copolymer (COC), or a combination thereof.

**15.** The thermoplastic composition according to any of claims 1 to 14, wherein the composition has a dissipation factor of less than 0.007 at a frequency of from 1 to 5 GHz when tested according to the SABIC Method.

Europäisches Patentamt
European Patent Office
Office européen des brevets

# EUROPEAN SEARCH REPORT

Application Number
EP 20 21 3872

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/184661 A1 (VAN DER MEE MARK [NL] ET AL) 19 July 2012 (2012-07-19)<br>* claim 1 *<br>* paragraph [0102] *<br>* paragraph [0106] * | 1-15 | INV.<br>C08L69/00<br>C08L67/02 |
| A | US 2015/368458 A1 (SUN XIAOYU [US] ET AL) 24 December 2015 (2015-12-24)<br>* claim 1; tables 7-8 * | 1-15 | |
| A | WO 2017/093232 A1 (SABIC GLOBAL TECHNOLOGIES BV [NL]) 8 June 2017 (2017-06-08)<br>* claims 1-5 * | 1-15 | |
| A | EP 1 979 403 A1 (GEN ELECTRIC [US]) 15 October 2008 (2008-10-15)<br>* claim 1 * | 1-15 | |

TECHNICAL FIELDS SEARCHED (IPC)

C08L

The present search report has been drawn up for all claims

1

| Place of search | Date of completion of the search | Examiner |
|---|---|---|
| The Hague | 9 June 2021 | O'Sullivan, Timothy |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT ON EUROPEAN PATENT APPLICATION NO.** EP 20 21 3872

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2021

| Patent document cited in search report | Publication date | Patent family member(s) | Publication date |
|---|---|---|---|
| US 2012184661 A1 | 19-07-2012 | CN 103732665 A | 16-04-2014 |
| | | EP 2663592 A1 | 20-11-2013 |
| | | KR 20140034736 A | 20-03-2014 |
| | | US 2012184661 A1 | 19-07-2012 |
| | | WO 2012095821 A1 | 19-07-2012 |
| US 2015368458 A1 | 24-12-2015 | CN 106459564 A | 22-02-2017 |
| | | EP 3158002 A1 | 26-04-2017 |
| | | KR 20170023094 A | 02-03-2017 |
| | | US 2015368458 A1 | 24-12-2015 |
| | | WO 2015195143 A1 | 23-12-2015 |
| WO 2017093232 A1 | 08-06-2017 | CN 108603015 A | 28-09-2018 |
| | | EP 3383952 A1 | 10-10-2018 |
| | | KR 20180089455 A | 08-08-2018 |
| | | US 2020165445 A1 | 28-05-2020 |
| | | WO 2017093232 A1 | 08-06-2017 |
| EP 1979403 A1 | 15-10-2008 | AT 453681 T | 15-01-2010 |
| | | EP 1979403 A1 | 15-10-2008 |
| | | US 2007275242 A1 | 29-11-2007 |
| | | WO 2007089747 A1 | 09-08-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019130269 A
- CN 107365480 A